# EUROPÄISCHE PATENTSCHRIFT

(11) **EP 1 134 587 B1**
(45) Veröffentlichungstag und Bekanntmachung des Hinweises auf die Patenterteilung: **18.05.2005**
(21) Anmeldenummer: 01105632.2
(22) Anmeldetag: 07.03.2001
(51) Int. Cl.: G01P 1/14, G07C 5/12, G01D 15/32

(54) **Anordnung zum Festspannen eines Diagrammscheibenbündels auf der Aufnahme eines Fahrtschreibers**
Device for clamping a diagram disk bundle on a record carrier of a tachograph
Dispositif pour le serrage d'une liasse de disques de diagramme sur un support dans un tachygraphe

(30) Priorität: 14.03.2000 DE 20004685 U
(43) Veröffentlichungstag der Anmeldung: 19.09.2001
(73) Patentinhaber: SIEMENS AKTIENGESELLSCHAFT, 80333 München (DE)
(72) Erfinder: Wahler, Torsten, 78073 Bad Dürrheim (DE)

(56) Entgegenhaltungen:
- DE-A- 2 616 441
- DE-A- 19 732 684
- DE-B- 2 433 745
- DE-U- 20 003 672
- DE-U- 29 913 770
- US-A- 2 739 031
- US-A- 4 862 191

## Beschreibung

Die Erfindung betrifft eine Anordnung zum Festspannen eines Diagrammscheibenbündels auf einer vom Registrierlaufwerk eines Fahrtschreibers zeitsynchron angetriebenen Aufnahme, wobei der Fahrtschreiber mit einer dem Wechseln von Diagrammscheibenbündeln dienenden Schublade ausgerüstet ist, an der Aufnahme ein Zentrierzapfen ausgebildet ist und das einem abschnittweisen, zeitlich aber ununterbrochenen Registrieren dienende Diagrammscheibenbündel mit einer auf den Zentrierzapfen aufsteckbaren Laufbuchse versehen ist, welche den einzelnen im Verlauf des Registrierens nach und nach von dem Diagrammscheibenbündel abgetrennten und an einem gerätefesten Anschlag anliegenden Diagrammscheiben als Lager dient, und wobei ein Spannelement vorgesehen ist, welches mit dem Zentrierzapfen bei gleichzeitigem Festspannen der Laufbuchse auf der Aufnahme lösbar verbindbar ist.

Eine derartige Vorrichtung befindet sich beispielsweise als 7-Tage-Tachograph auf dem Markt.

Die Realisierung des gattungsgemäßen Registrierkonzeptes in einem Fahrtschreiber mit einem flachen, quaderförmigen Einbaugehäuse und einer dem Eingeben bzw. Entnehmen der Diagrammscheibenbündel dienenden Schublade ist durch den eingeschränkten Bauraum in Richtung der Hochachse des Fahrtschreibers erheblich erschwert, und zwar deshalb, weil einerseits für das Spannelement, das dem Festspannen der Laufbuchse eines Diagrammscheibenbündels auf der Aufnahme dient, erhöhter Bauraum erforderlich ist andererseits die Gefahr besteht, dass durch Feuchtigkeitsaufnahme ein auch nur leicht gewölbtes Diagrammscheibenbündel bzw. eine vom Diagrammscheibenbündel abstehende Bündeldiagrammscheibe beim Schließen oder Öffnen der Schublade am oberen Rand der Schubladenöffnung anstößt oder während des Registriertransports an den Registriermitteln innerhalb des Fahrtschreibers streift oder hängen bleibt. Diese Gefahr ist im Gegensatz zu Einzeldiagrammscheiben bei Bündeldiagrammscheiben deshalb nicht zu unterschätzen, weil infolge der sektorförmigen Ausschnitte der Bündeldiagrammscheiben eine größere Labilität gegeben ist. Hinzu kommt, dass der eine Randbereich des sektorförmigen Ausschnitts einer Bündeldiagrammscheibe angebogen ausgebildet, und damit gewährleistet ist, dass das für das Durchschneiden der Verbindungsstreifen zwischen den einzelnen Bündeldiagrammscheiben und der Grundscheibe des Diagrammscheibenbündels vorgesehene Trennmesser, nach dem Einfallen in den Ausschnitt einer Bündeldiagrammscheibe beim weiteren Transport des restlichen Diagrammscheibenbündels zuverlässig unter die jeweils oben liegende Bündeldiagrammscheibe eingreift.

Ein weiteres Problem dieses Registrierkonzeptes besteht in der wenig vorteilhaften Handhabbarkeit des in der Regel losen und somit verlierbaren Spannelementes. Eine Verwendung von am Zentrierzapfen gelagerten Spannhebeln zum Festhalten der Laufbuchse eines Diagrammscheibenbündels auf der Aufnahme vermeidet zwar ein loses Teil, erfordert aber Bauhöhe und ist wegen der Kleinheit der.Spannhebel - die Laufbuchse muss beim Einlegen eines Diagrammscheibenbündels über die Spannhebel auf den Zentrierzapfen gesteckt werden - wenig handhabungsfreundlich.

Aus dem US-Patent US 4,862,191 ist bereits ein Tachograph bekannt, welcher das Fixieren einer Diagrammscheibe mittels eines Spannelementes vorsieht. Die Vorkehrungen zum Festspannen und Zentrieren ermöglichen kein Festspannen, insbesondere eines Diagrammscheibenbündels, bei zugleich reduzierter Bauhöhe der Anordnung.

Die der Erfindung zugrunde liegende Aufgabe bestand somit darin, die Eignung eines mit einer Schublade ausgestatteten Fahrtschreibers für die Verwendung von Diagrammscheibenbündeln zu verbessern, insbesondere die Funktionssicherheit zu erhöhen und die Handhabung beim Einlegen und Entnehmen der Diagrammscheibenbündel mit möglichst geringem Aufwand zu erleichtern.

Die erfindungsgemäße Lösung der gestellten Aufgabe sieht eine Anordnung mit den Merkmalen des Anspruchs 1 vor.

Das bevorzugte Ausführungsbeispiel ist dadurch gekennzeichnet, dass der Träger als eine ein eingelegtes Diagrammscheibenbündel weitgehend abdeckende Platte ausgebildet ist und dass der Träger einen dem Durchtritt der Schreibstifte des Fahrtschreibers ermöglichenden Ausschnitt aufweist und das an dem Spannelement einerseits Betätigungsmittel andererseits ein Renkansatz ausgeformt sind, wobei der Renkansatz hülsenförmig ausgebildet und mit Schlitzen versehen ist, welche mit den im Zentrierzapfen ausgeformten Führungsstegen eine Renkverbindung ermöglichen.

Weitere vorteilhafte Ausgestaltungen der Erfindung beschreiben die übrigen Unteransprüche.

Der entscheidende Vorteil, den die gefundene Lösung bietet, ist insbesondere darin zu sehen, dass ein Träger vorgesehen ist, mittels dessen ein eingelegtes Diagrammscheibenbündel weitgehend abdeckbar ist und dass das Spannelement in dem Träger drehbar gelagert ist. Auf diese Weise ist das Spannelement unverlierbar gehaltert und der Träger wird beim Festspannen der Laufbuchse eines Diagrammscheibenbündels auf der uhrzeitabhängig angetriebenen Aufnahme selbsttätig in seine Funktionsstellung als Diagrammscheibenniederhalter gebracht und in dieser Stellung festgehalten. Als besonders vorteilhaft ist ferner hervorzuheben, dass die Renkverbindung innerhalb des Zentrierzapfens erfolgt wodurch die Bauhöhe erheblich reduziert ist. Auch die am Spannelement ausgeformten Betätigungsmittel dienen diesem Ziel und gewährleisten eine zufriedenstellende Handhabung indem in einer axialen Senkung des betätigungsseitig einen möglichst großen Durchmesser aufweisenden Spannelementes ein vorzugsweise mit einem der Betätigung des Spannelementes mittels einer Münze oder dergleichen dienenden Schlitz versehener Griffsteg ausgebildet ist. Vorteilhaft ist außerdem, dass der Träger lediglich durch Aufschnappen auf in der Schublade ausgeformte Lagerachsen montierbar ist und das Spannelement mittels eines Halteflansches ebenfalls durch rastendes Verbinden am Träger gehaltert werden kann. Das heißt, die Montage des Spannelementes am Träger und die Montage des Trägers in der Schublade sind erheblich vereinfacht.

Im folgenden sei die Erfindung anhand von Zeichnungen näher erläutert. Es zeigen:
- Figur 1: eine Draufsicht auf eine in der Einlege-/Entnahmeposition befindliche Schublade eines Fahrtschreibers mit einer für die Verwendung von Diagrammscheibenbündeln vorgesehenen Registriereinrichtung,
- Figur 2: eine Draufsicht eines dem Haltern eines Spannelementes und dem Niederhalten der Diagrammscheibenbündel dienenden Trägers,
- Figur 3: einen Schnitt gemäß der Schnittlinie A in Figur 2,
- Figur 4: eine Draufsicht der Aufnahme,
- Figur 5: einen Schnitt der Aufnahme gemäß der Schnittlinie B in Figur 4.

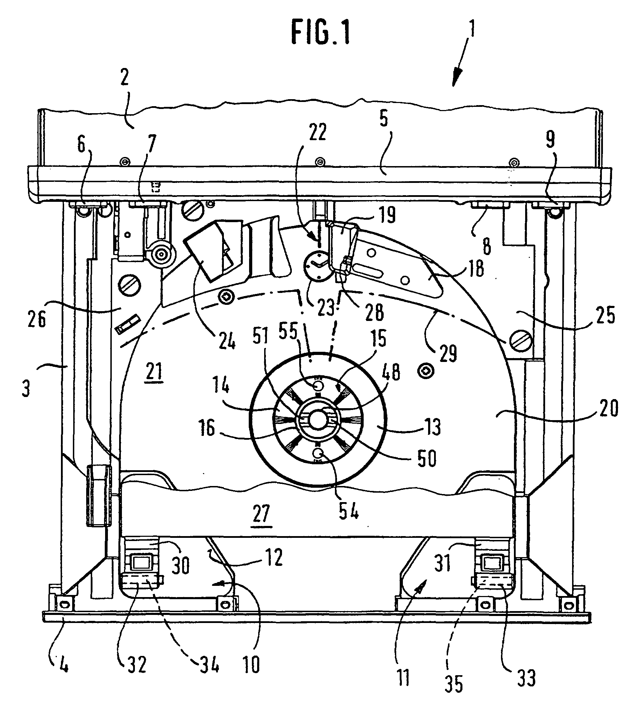

Der in Figur 1 dargestellte Fahrtschreiber 1 ist als Einbaugerät ausgebildet. Er weist ein quaderförmiges Gehäuse 2 mit einer in geeigneten, in Figur 1 nicht dargestellten Führungsschienen gelagerten Schublade 3 auf. Frontseitig ist die Schublade 3 mit einer Blende 4 abgeschlossen, die sich bei geschlossener Schublade 3 harmonisch in eine dem Gehäuse 2 zugeordnete Frontwand 5 einfügt. In der Frontwand 5 kann ein einem im Gehäuse 2 angeordneten Display zugeordneter Fensterausschnitt vorgesehen sein; mehrere durch die Frontwand hindurchgreifende Tasten, von denen in Figur 1 die mit 6, 7, 8 und 9 bezeichneten sichtbar sind, dienen dem Fahrer und dem Beifahrer wenigstens dem Eingeben der Arbeitsarten, dem Freigeben der Schublade 3 und dem Sichtbarmachen von Fahrt- und Arbeitszeitdaten.

Mit 10 und 11 sind in der Schublade 3 vorgesehene Durchbrüche bezeichnet, welche die Entnahme eines eingelegten Diagrammscheibenbündels erleichtern. 12 stellt den Boden der Schublade 3 dar. Ein in dem Boden 12 integriertes Laufwerk dient dem uhrzeitrichtigen Antrieb einer Aufnahme 13, auf welcher ein in die Schublade 3 eingelegtes Diagrammscheibenbündel festgespannt wird. Als Verdrehsicherung dient eine an der Aufnahme 13, beispielsweise mittels einer nicht näher bezeichneten Nietverbindung befestigte, ringförmige Wellfeder 14, aus der Mitnahmezacken, einer ist mit 15 bezeichnet, herausgebogen sind. Ein mit der Aufnahme 13 ein Teil bildender Zentrierzapfen 16 ist für das Ausrichten der aufzunehmenden Diagrammscheibenbündel vorgesehen, wobei der Aussendurchmesser des Zentrierzapfens 16 dem Innendurchmesser der Laufbuchse eines Diagrammscheibenbündels entspricht. Das Festspannen eines Diagrammscheibenbündels auf der Aufnahme 13 erfolgt, indem ein im folgenden näher beschriebenes Spannelement 17 unter der Kraftwirkung der Wellfeder 14 auf die Laufbuchse des betreffenden Diagrammscheibenbündels einwirkt und mit dem Zentrierzapfen 16 in geeigneter Weise in Verbindung gebracht wird.

Der Vollständigkeit halber sei noch erwähnt, dass die Laufbuchse, auf der die einzelnen Diagrammscheiben eines Diagrammscheibenbündels über deren Zentrumsöffnungen gelagert sind, in geeigneter Weise an einer Grundscheibe des betreffenden Diagrammscheibenbündels befestigt ist. Außerdem ist jede einzelne Diagrammscheibe des Diagrammscheibenbündels über einen Verbindungsstreifen, vorzugsweise einen Papierstreifen, mit der Grundscheibe verbunden. Auch ist jede Diagrammscheibe mit einem Ausschnitt versehen, dessen einer Randbereich angebogen ausgebildet ist, so dass gewährleistet ist, dass ein für das Durchschneiden der Verbindungsstreifen vorgesehenes Trennmesser 18 nach dem Einfallen in den Ausschnitt unter die jeweils obenliegende Diagrammscheibe eingreift. Für ein zeitrichtiges Einlegen der Diagrammscheibenbündel und eine uhrzeitrichtige Zuordnung der Registrierungen auf den Diagrammscheiben sind diese üblicherweise randlich mit einer Zeitskale versehen.

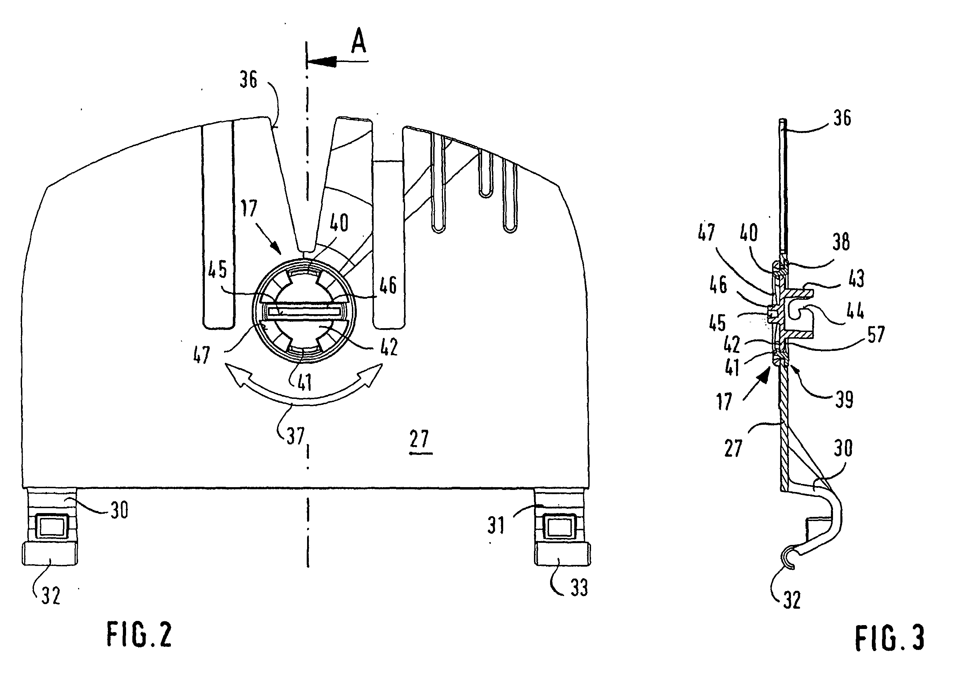

Aus der Figur 1 ist ersichtlich, dass das Trennmesser 18 an einem Halter 19 befestigt und letzterer mit einer plattenförmigen, die Registrierunterlage bildenden Auflage 20 verbunden ist, die ihrerseits in geeigneter Weise auf dem Boden 12 der Schublade 3 befestigt ist. Mit 21 ist eine an der Auflage 20 ausgebildete, den umlaufenden Diagrammscheibenbündeln zugeordnete Führungsfläche bezeichnet. 22 stellt eine mit einem Uhrsymbol 23 versehene Markierungslinie dar, die dem uhrzeitrichtigen Einlegen eines Diagrammscheibenbündels dient. Ein Aufbau 24 deckt eine als Einlegekontrolle wirkende Lichtschranke ab. Weitere Abdeckungen 25 und 26 dienen als Staubschutz und Eingriffsicherung bezüglich der in der Schublade 3 flach verteilten Bauelemente des die Aufnahme 13 antreibenden Laufwerkes. Ein mit 27 bezeichneter Träger, der in Figur 1 nur teilweise dargestellt ist, dient der Halterung des Spannelementes 17 (Figuren 2, 3) und dem Niederhalten eines eingelegten Diagrammscheibenbündels bzw. dem Niederhalten von vom Bündel abgetrennten, am Anschlag 28 anliegenden Bündeldiagrammscheiben. Die in Richtung des Trennmessers 18 weisende äußere Kontur des Trägers 27 ist in Figur 1 mit einer strichpunktierten Linie 29 gekennzeichnet. An dem Träger 27 sind der Lagerqualität wegen mit möglichst großem Abstand voneinander Lagerarme 30 und 31 mit axial geschlitzten Lagerbuchsen 32 und 33 ausgeformt. Letzteren sind an der Schublade 3 angeformte Achsen 34 und 35 zugeordnet, mit denen die Lagerbuchsen 32 und 33 des Trägers 27 rastend verbindbar sind.

Die Draufsicht des Trägers 27 sowie die Schnittdarstellung (Figuren 2 und 3) zeigen, dass der Träger 27 als flache Platte mit einem dem Durchgreifen der Schreibstifte des Fahrtschreibers 1 dienenden sektorförmigen Ausschnitt 36 ausgebildet ist. Ein vorzugsweise gießtechnisch angebrachter Doppelpfeil 37 soll auf das notwendige Betätigen des Spannelementes 17 hinweisen. Der Doppelpfeil 37 kann zusätzlich mit wörtlichen Hinweisen, wie beispielsweise spannen/lösen versehen werden. Die Halterung des Spannelementes 17 an dem Träger 27 erfolgt, wie aus der Figur 3 ersichtlich ist, mittels eines Halteflansches 38, dem eine im Träger 27 ausgebildete Fassung 39 zugeordnet ist und der im montierten Zustand mittels Rasthaken 40 und 41 an dem Spannelement 17 angreift. Das heißt, in einem Boden 42 des betätigungsseitig tellerförmig ausgebildeten Spannelementes 17, an dem einerseits die Betätigungsmittel andererseits die Befestigungsmittel angeformt sind, sind nicht näher bezeichnete Öffnungen für den Durchtritt der Rasthaken 40, 41 des Halteflansches 38 ausgebildet. Ferner zeigt die Figur 3, dass das Spannelement 17 als Befestigungsmittel einen hülsenförmigen Renkansatz 43 aufweist, in dem sich gegenüberliegende Kurvenschlitze - einer ist in Figur 3 sichtbar und mit 44 bezeichnet - ausgebildet sind. Als Betätigungsmittel ist an dem Spannelement 17 ein mit einem Schlitz 45 versehener Griffsteg 46 angeformt, und zwar derart, dass er sich weitgehend innerhalb einer axialen Senkung 47 des Spannelementes 17 befindet und damit eine besonders flache Ausbildung gegeben ist. Trotz der flachen Ausbildung besteht andererseits aufgrund des betätigungsseitig großen Durchmessers des Spannelementes 17 und somit der relativ großen Länge des Griffsteges 46 eine ausreichend gute Betätigbarkeit beim Spannen und Lösen des Spannelementes 17.

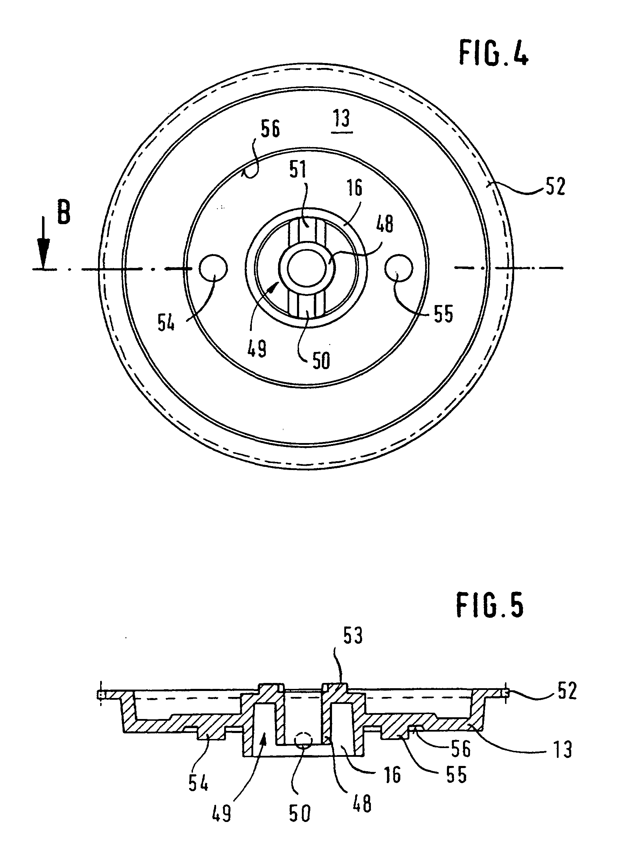

Die Figuren 4 und 5, die eine Draufsicht und einen Schnitt der Aufnahme 13 darstellen, sollen d,ie Renkverbindungsmittel verdeutlichen, mit denen das Spannelement 17 beim Festspannen der Laufbuchse eines Diagrammscheibenbündels in Wirkverbindung gelangt. Dabei ist ersichtlich, dass der an der Aufnahme 13 angeformte Zentrierzapfen 16 hülsenförmig ausgebildet ist. Koaxial zum Zentrierzapfen 16 ist eine der Aufnahme 13 zugeordnete Lagerbuchse 48 ausgeformt. In dem Zwischenraum 49 zwischen der Lagerbuchse 48 und dem Zentrierzapfen 16 sind im wesentlichen rechtwinklig zur Achse der Aufnahme 13 den Kurvenschlitzen 44 des Spannelementes 17 entsprechend, vorzugsweise zylindrische Führungsstege 50 und 51 ausgebildet. Mit 52 ist eine der Aufnahme 13 zugeordnete Verzahnung bezeichnet; 53 stellt einen aufgrund der spritzgießtechnischen Herstellung der Führungsstege 50, 51 unterbrochenen Laufbund dar. Mit 54 und 55 bezeichnete Nietzapfen dienen in Verbindung mit einer Senkung 56 der Aufnahme und der Befestigung der Wellfeder 14.

Der Vollständigkeit halber sei noch erwähnt, dass beim Festspannen eines Diagrammscheibenbündels auf der Auflage 13, wobei der Renkansatz 43 des Spannelementes 17 in den Zentrierzapfen 16 eingreift, die Stirnfläche der Laufbuchse des Diagrammscheibenbündels in Wirkverbindung mit einer Ringfläche 57 des Spannelementes 17 steht und die Laufbuchse bis zum Einrasten der Renkverbindung unter der Wirkung der Wellfeder 14 auf dem Zentrierzapfen 16 axial verschoben wird.

## Patentansprüche

1. Anordnung zum Festspannen eines Diagrammscheibenbündels auf einer vom Registrierlaufwerk eines Fahrtschreibers zeitsynchron angetriebenen Aufnahme (13), wobei der Fahrtschreiber mit einer dem Wechseln von Diagrammscheibenbündeln dienenden Schublade (3) ausgerüstet ist, an der Aufnahme (13) ein Zentrierzapfen (16) ausgebildet ist und das einem abschnittweisen, zeitlich aber ununterbrochenen Registrieren dienende Diagrammscheibenbündel mit einer auf den Zentrierzapfen (16) aufsteckbaren Laufbuchse versehen ist, welche den einzelnen im Verlauf des Registrierens nach und nach von dem Diagrammscheibenbündel abgetrennten und an einem gerätefesten Anschlag (28) anliegenden Diagrammscheiben als Lager dient, und wobei ein Spannelement (17) vorgesehen ist, welches mit dem Zentrierzapfen (16) bei gleichzeitigem Festspannen der Laufbuchse auf der Aufnahme (13) lösbar verbindbar ist, **dadurch gekennzeichnet,**
**dass** das Spannelement (17) drehbar an einem in der Schublade (3) schwenkbar gelagerten Träger (27) angeordnet ist,
**dass** an der Aufnahme (13) dem Spannelement (17) zugeordnete Führungsstege (50, 51) ausgeformt sind,
**dass** an dem Spannelement (17) einerseits Betätigungsmittel andererseits ein Renkansatz (43) ausgeformt sind, wobei der Renkansatz (43) hülsenförmig ausgebildet und mit Kurvenschlitzen versehen ist, welche mit den im Zentrierzapfen (16) ausgeformten Führungsstegen (50, 51) eine Renkverbindung ermöglichen.

2. Anordnung nach Anspruch 1, **dadurch gekennzeichnet,**
**dass** der Träger (27) als eine ein eingelegtes Diagrammscheibenbündel weitgehend abdeckende Platte ausgebildet ist und
**dass** der Träger (27) einen dem Durchtritt der Schreibstifte des Fahrtschreibers (1) ermöglichenden Ausschnitt (36) aufweist.

3. Anordnung nach Anspruch 1, **dadurch gekennzeichnet,**
**dass** das Spannelement (17) als Renkmutter ausgebildet ist.

4. Anordnung nach Anspruch 1, **dadurch gekennzeichnet,**
**dass** an der Aufnahme (13) eine Lagerbuchse (48) ausgebildet ist und
**dass** der Zentrierzapfen (16) eine konzentrisch zur Lagerbuchse (48) ausgebildete Hülse darstellt.

5. Anordnung nach Anspruch 4, **dadurch gekennzeichnet,**
**dass** die dem Spannelement (17) zugeordneten Führungsstege (50, 51) zwischen der Lagerbuchse (48) und dem Zentrierzapfen (16) in radialer Richtung sich gegenüberliegend ausgeformt sind.

6. Anordnung nach Anspruch 1, **dadurch gekennzeichnet,**
**dass** dem Spannelement (17) ein Halteflansch (38) zugeordnet ist und
**dass** der Halteflansch (38) und das Spannelement (17) derart ausgebildet sind,
**dass** das Spannelement (17) mittels des Halteflansches (38) durch rastendes Verbinden drehbar an dem Träger (27) lagerbar ist.

7. Anordnung nach Anspruch 1, **dadurch gekennzeichnet,**
**dass** das Spannelement (17) betätigungsseitig tellerförmig ausgebildet ist.

8. Anordnung nach Anspruch 1, **dadurch gekennzeichnet,**
**dass** an dem Spannelement (17) betätigungsseitig ein Griffsteg (46) ausgebildet ist.

## Claims

1. Arrangement for clamping a tachograph disc bundle on a receptacle (13) driven in synchronism with respect to the time by the recording mechanism of a tachograph, the tachograph being fitted with a tray (3) that is used for changing tachograph disc bundles, a centring stud (16) being formed on the receptacle (13), and the tachograph disc bundle, which is used for section-by-section but uninterrupted recording, being provided with a bushing that can be mounted on the centring stud (16) and serves as a bearing for the individual tachograph discs, which are cut off one by one from the tachograph disc bundle in the course of recording and rest against a stop (28) fixed relative to the device, and a clamping element (17) being provided that can be connected releasably to the centring stud (16) while the bushing is being clamped on the receptacle (13), **characterized in that** the clamping element (17) is arranged rotatably on a carrier (27) pivotably mounted in the tray (3), **in that** guide webs (50, 51) associated with the clamping element (17) are formed on the receptacle (13), **in that** actuating means, on the one hand, and a bayonet projection (43), on the other hand, are formed on the clamping element (17), the bayonet projection (43) being in the form of a sleeve and being provided with curved slots that allow a bayonet joint to be formed with the guide webs (50, 51) formed in the centring stud (16).

2. Arrangement according to Claim 1, **characterized in that** the carrier (27) is designed as a plate that to a large extent covers an inserted tachograph disc bundle and **in that** the carrier (27) has a cutout (36) that allows the styluses of the tachograph (1) to pass through.

3. Arrangement according to Claim 1, **characterized in that** the clamping element (17) is designed as a bayonet nut.

4. Arrangement according to Claim 1, **characterized in that** a bearing bush (48) is formed on the receptacle (13) and **in that** the centring stud (16) forms a sleeve concentric with the bearing bush (48).

5. Arrangement according to Claim 4, **characterized in that** the guide webs (50, 51) associated with the clamping element (17) are formed between the bearing bush (48) and the centring stud (16) such that they lie opposite one another in the radial direction.

6. Arrangement according to Claim 1, **characterized in that** the clamping element (17) is assigned a holding flange (38) and **in that** the holding flange (38) and the clamping element (17) are designed in such a way that the clamping element (17) can be mounted rotatably on the carrier (27) by latch-action connection by means of the holding flange (38).

7. Arrangement according to Claim 1, **characterized in that** the clamping element (17) is of cup-shaped design on the actuating side.

8. Arrangement according to Claim 1, **characterized in that** a gripping web (46) is formed on the actuating side of the clamping element (17).

## Revendications

1. Dispositif permettant de fixer et de serrer une liasse de disques-diagrammes sur un mandrin (13) entraîné en synchronisation avec le temps par le mécanisme d'enregistrement d'un tachygraphe, le tachygraphe étant équipé d'un tiroir (3) servant à remplacer des liasses de disques-diagrammes, le mandrin (13) comportant un tourillon de centrage (16) et la liasse de disques-diagrammes, qui sert à un enregistrement section par section, mais ininterrompu dans le temps, étant munie d'une douille tournante pouvant être enfichée sur le tourillon de centrage (16) et servant de palier aux différents disques-diagrammes, qui sont retirés, au cours de l'enregistrement, l'un après l'autre de la liasse de disques-diagrammes et a ppliqués sur une butée (28) fixe dans l'appareil, et un élément de serrage (17) étant prévu, lequel peut être raccordé d'une façon démontable au tourillon de centrage (16) tout en serrant simultanément la douille tournante sur le mandrin (13) **caractérisé par le fait**
**que** l'élément de serrage (17) est monté, de façon qu'il puisse tourner, sur un support (27) fixé d'une façon pivotante dans le tiroir (3),
**que** des nervures de guidage (50, 51) correspondant à l'élément de serrage (17) sont ménagées sur le mandrin(13),
**que**, sur l'élément de serrage (17), d'une part, des moyens de manoeuvre et, d'autre part, un épaulement à baïonnette (43) sont ménagés,
l'épaulement à baïonnette (43) étant conçu en forme de douille et étant muni de fentes courbées, qui permettent, avec les nervures de guidage (50, 51) ménagées dans le tourillon de centrage (16), une liaison à baïonnette.

2. Dispositif selon la revendication 1 **caractérisé par le fait**
**que** le support (27) est conçu sous la forme d'une plaque recouvrant largement une liasse de disques-diagrammes mise en place et
**que** le support (27) comporte une découpe (36) permettant le passage des stylets du tachygraphe (1).

3. Dispositif selon la revendication 1 **caractérisé par le fait**
**que** l'élément de serrage (17) est conçu comme écrou à baïonnette.

4. Dispositif selon la revendication 1 **caractérisé par le fait**
**que**, sur le mandrin (13), une douille support (48) est ménagée et
**que** le tourillon de centrage (16) constitue une douille conçue concentriquement à la douille support (48).

5. Dispositif selon la revendication 4 **caractérisé par le fait**
**que** les nervures de guidage (50, 51) correspondant à l'élément de serrage (17) sont ménagées dans le sens radial l'une en face de l'autre entre la douille support (48) et le tourillon de centrage (16).

6. Dispositif selon la revendication 1 **caractérisé par le fait**
**qu'**une bride de retenue (38) est affectée à l'élément de serrage (17) et
**que** la bride de retenue (38) et l'élément de serrage (17) sont conçus de telle sorte
**que** l'élément de serrage (17) peut s'appliquer sur le support (27), en pouvant tourner, au moyen de la bride de retenue (38) grâce à une liaison par encliquetage.

7. Dispositif selon la revendication 1 **caractérisé par le fait**
**que** l'élément de serrage (17) est conçu en forme de plateau du côté du maniement.

8. Dispositif selon la revendication 1 **caractérisé par le fait**
**qu'**une barrette de maniement (46) est ménagée du côté du maniement sur l'élément de serrage (17).
